# EUROPEAN PATENT APPLICATION

(11) **EP 3 095 663 A1**
(43) Date of publication of application: **23.11.2016**
(21) Application number: 15382261.4
(22) Date of filing: 19.05.2015
(51) Int. Cl.: B61C 17/02, F02M 21/00, F17C 1/00, F17C 13/08, B61F 1/08

(54) **RAILWAY VEHICLE COMPRISING IN ITS UNDERFRAME A LNG STORAGE AND SUPPLY SYSTEM AND METHOD FOR MOUINTING SAID SYSTEM IN A RAILWAY VEHICLE**

(71) Applicant: FNX Oil & Gas, S.L.U., 01195 Vitoria, Alava (ES)
(72) Inventor: PAITUVÍ, Martín, 01192 Vitoria, Álava (ES); CREIXELL, Jordi, 01192 Vitoria, Álava (ES)
(74) Representative: Balder IP Law, S.L.

(57) **Abstract**

The invention relates to a railway vehicle (1) comprising in its underframe (U) a LNG storage and supply system (S), the system (S) comprising a box (7) and a plurality of LNG tanks (2) arranged in the box (7), wherein the box (7) is attached to the underframe by means of fixation assemblies (10) and the LNG tanks (2) are attached to the underframe (U) by means of fixation assemblies (10), such that the box (7) and the LNG tanks (2) are independently fixed to the underframe (U). The invention also relates to a method for mounting said LNG storage and supply system in the underframe of a railway vehicle.

## Description

### TECHNICAL FIELD

The present invention relates to the integration of LNG storage and supply systems in the underframe of railway vehicles.

### STATE OF THE ART

Use of Natural Gas (NG) as a fuel for railroad traction is extremely interesting because of the savings that it can bring to the operation, being its cost significantly lower than Diesel.

Dual fuel operation of the locomotive, that is, the possibility to feed on diesel or NG, provides the best solution for operators willing to obtain savings from the use of a cheaper fuel, while keeping the capability to run the locomotive with Diesel only in case that Natural Gas is not available for refueling.

Bi-fuel technology has been around for many years, and it is a demonstrated and safe way to convert Diesel engines, provided that sound engineering practices are used.

When LNG is used, it has to be taken into account that LNG is stored at a very low temperature, required to keep it in liquid state, tanks holding LNG must be build taking into account that high thermal insulation is required. Double wall, vacuum insulated tanks are common in this application.

In bi-fuel technology it is well known to store the fuel for locomotives in a separate tender just behind the locomotive. However, the LNG tender causes a number of problems for the operator, as the tender has to be next to the locomotive and always behind it, on the moving sense. This operation makes necessary continuous changes on the railway composition cars order. Those changes require big railways maneuver areas and higher operational costs due to the time spent on the maneuvers. There are technical challenges for taking the fuel from the tender to the engines on the locomotive too. Those challenges give some reliability problems and maintenance over costs. As the fluid hoses and connectors must be flexible, because the tender moves respect to the locomotive, and, at the same time, they have to transport inside fluids with temperatures very different to the ambient ones.

To overcome these drawbacks, it is known to provide for a locomotive comprising in its underframe a LNG storage system, the system comprising a plurality of LNG tanks, as disclosed, for example, in US 2014261073 A1.

However, when it comes to installing these systems in many vehicles or locomotives, it becomes essential to have an efficient integration system that allows limiting the maximum work-site installation, and especially allows to build and assemble the maximum number of components before their final integration in the vehicle, while providing a reliable fixing of the tanks to the underframe.

Another important aspect, which involves many assembly restrictions and high costs, is the limited space that is available to accommodate both during the operation and the installation the storage and supply system. Indeed, it is expected that the dual power system is installed on existing and already laid locomotives, which implies many restrictions of space and maneuverability for the storage and supply system installer.

Another aspect to consider, not solved by the devices of the prior art, is a more compact LNG replenishment system, which enables fast and reliable refueling.

Another aspect is to ensure that the attachment of the storage and supply system to the underframe is as reliable as possible, and at the same time which is capable of isolating properly the different parts from the vibrations due to the movement of the vehicle. It is also necessary to provide an optimum protection for the tanks, because the space under the underframe is exposed to projections of stones.

### DESCRIPTION OF THE INVENTION

For overcoming the drawbacks of the prior art, the present invention proposes a railway vehicle comprising in its underframe a LNG storage and supply system, the system comprising a box and a plurality of LNG tanks arranged in the box, characterized in that the box is attached to the underframe by means of fixation assemblies and the LNG tanks are attached to the underframe by means of other fixation assemblies, such that the box and the LNG tanks are independently fixed to the underframe.

This arrangement provides for a safe and reliable integration of the LNG storage and supply system.

According to many optional features of the present invention, some of which even being considered as separate inventions as pointed out below:
- the box is made of a metallic supporting structure, the metallic supporting structure comprising a piping attached thereto, said piping being destined to be connected to the LNG tanks, the box comprising covers supported by the metallic supporting structure. Therefore, the metallic structure, when installed, already carries the main piping connections, and has the further function of supporting the covers.
- the box comprises:
   - two side covers supported by and bolted to the metallic supporting structure;
   - an inspection trap for each tank, said inspection traps being mounted such that they tend to the closed position by their own weight;
   - an undercover provided with ventilation holes;
   - a front cover provided with ventilation holes;
   - two filling port covers;
   - a filling ports piping cover;
- the assemblies are made of two adjoining L shaped plates, each of the plates having a first portion either fixed to the underframe or to the supporting metallic structure / tanks, the second portion of the plates abutting to each other with and interposed plastic element.
- the tanks are placed with their axis transversal to the longitudinal direction of the vehicle.
- the vehicle comprises bushings placed at the upper part of the underframe, said bushings being destined to house the connections between fluid, electric and/or the electronic connections between the LNG storage and supply system and the engines.
- the vehicle comprises a regasifier attached to the metallic supporting structure.
- the LNG storage and supply system comprises a first gas filling port oriented laterally relative to the longitudinal direction of the vehicle, the first gas filling port branching into a plurality of individual filling pipes, one for each tank, each individual filling pipe comprising an opening / closing valve corresponding to that individual pipe, the tank being provided with a filling level sensor sub-assembly, so that a compact and accessible tank filling system is achieved. It is pointed out that these features form a separate invention by themselves, since it would be compatible with other ways of fixing the tanks and the box to the underframe. This piping topology for filling the tanks allows for an easy and fast filling of the tanks, while being optimum from the point of view of the compactness of the LNG storage and supply system. Preferably, the vehicle comprises a second gas filling port oriented laterally relative to the longitudinal direction of the vehicle, and placed in the vehicle opposite the side where the first gas filling port is placed, the second gas filling port branching into a plurality of individual filling pipes, one for each tank, each individual filling pipe comprising an opening / closing valve corresponding to that individual pipe.
- the vehicle comprises for each tank a feeding pipe which connects the tank with the regasifier.
- the vehicle comprises an electronic control unit connected to the filling sensors and the valves.
- the tanks comprise at their ends, two upper welded metallic strips, and two lower welded metallic strips, the upper welded metallic strips being formed with a rectangular slot and being destined to be supported by and attached to the fixation assemblies, the lower welded metallic strips being formed with a rectangular slot destined to the insertion of a raising tool.
- the railway vehicle comprises diesel tanks in the underframe, said diesel tanks being arranged in a volume adjacent to the GNL tanks.
- Preferably, the vehicle is a locomotive.

The invention also relates to a method for mounting a LNG storage and supply system in the underframe of a railway vehicle, which comprises the steps consisting of:
a) arranging bushings at the upper part of the underframe, said bushings being placed to connect the lower part of the underframe with the space over the underframe, said bushings being destined to conduct the connections between fluid, electric and/or the electronic connections between the LNG storage and supply system and the engines;
b) fixing a metallic supporting structure to the underframe, the supporting structure being provided with piping being destined to be connected to the LNG tanks, a regasifier and the filling port pipes;
c) Introducing the LNG tanks in the supporting structure and fixing them to the underframe;
d) fixing the gas filling ports oriented laterally relative to the longitudinal direction of the vehicle on both sides of the vehicle, and mounting the opening / closing valves;
e) mounting the covers on the metallic supporting structure of obtaining a protection box.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows the topology of the main connections and piping.
Figure 2 shows the locomotive frame, the diesel tank and the LNG tanks assembly.
Figure 3 shows some LNG tanks assembly main components that are referred on the invention description.
Figure 4 shows schematically some structural components that are referred on the invention description.
Figure 5 is a perspective showing the crashworthy enclosure as a metallic box attached to the underframe.
Figure 6 is a view analog to figure 5, but wherein the covers have been omitted.
Figure 7 shows the bushings allowing that conduct the wiring and the piping from the underframe to the engines.
Figure 8 shows details of the supporting sub-assemblies.
Figure 9 shows the piping assembled on every tank before fixing the tank in the underframe.
Figure 10 is an enlarged view of the piping that has to be mounted on the tank prior to mount the tank on the underframe.
Figure 11 shows the metallic structure which has part of the piping and the regasifier fixed thereto.
Figure 12 shows the filling pipes and the filling ports.

### DESCRIPTION OF A WAY OF CARRYING OUT THE INVENTION

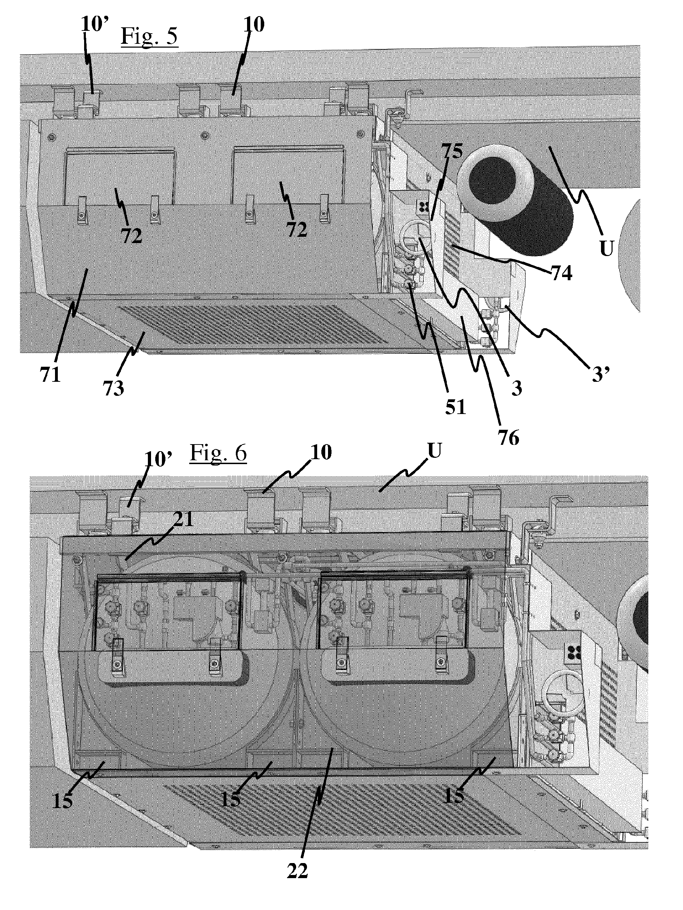

As shown in figures 5 and 6, the invention relates to a railway vehicle 1 comprising in its underframe U a LNG storage and supply system S, the system S comprising a protective box 7 and a plurality of LNG tanks 2 arranged in the box 7.

According to an aspect of the invention, the box 7 is attached to the underframe by means of fixation assemblies 10' and the LNG tanks 2 are attached to the underframe U by means of fixation assemblies 10 different from the fixation assemblies 10', such that the box 7 and the LNG tanks 2 are independently fixed to the underframe U. Such arrangement is different from the arrangement disclosed in US 2014261073 A1, where the tanks are placed in the box and the box is attached to the underframe.

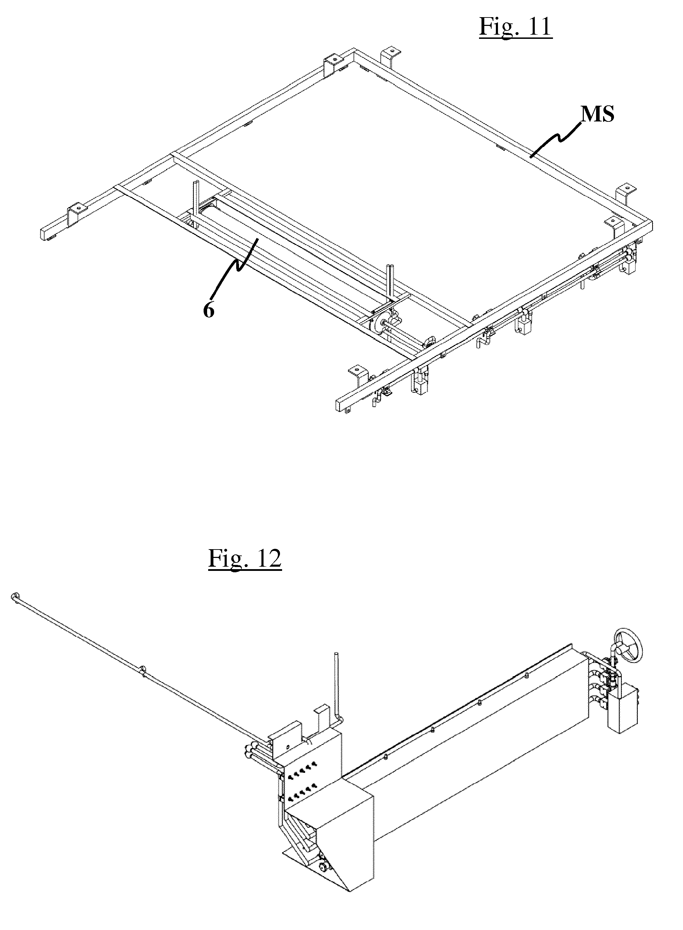

The box 7 is made of a metallic supporting structure MS, shown in FIG. 11, the metallic supporting structure MS comprising a piping attached thereto, said piping being destined to be connected to the LNG tanks 2.

As shown in FIG. 5, the box 7 comprises covers 71, 73, 74, 75, 76 supported by the metallic supporting structure MS, and preferably the box 7 comprises:
- two side covers 71 supported by and bolted to the metallic supporting structure MS;
- an inspection trap 72 for each tank 2, said inspection traps being mounted such that they tend to the closed position by their own weight;
- an undercover 73 provided with ventilation holes;
- a front cover 74 provided with ventilation holes;
- two filling port covers 75;
- a filling ports piping cover 76;

The heavy duty perimeter protection obtained prevents damage from mechanical impacts on the LNG tanks. Tank walls are intended to contain the LNG and to make its thermal isolation, as LNG has to be maintained at -150 °C. So tank walls are thick but not especially resistant. The locomotive underframe area is a very harsh environment and stone and metal impacts are very repetitive.

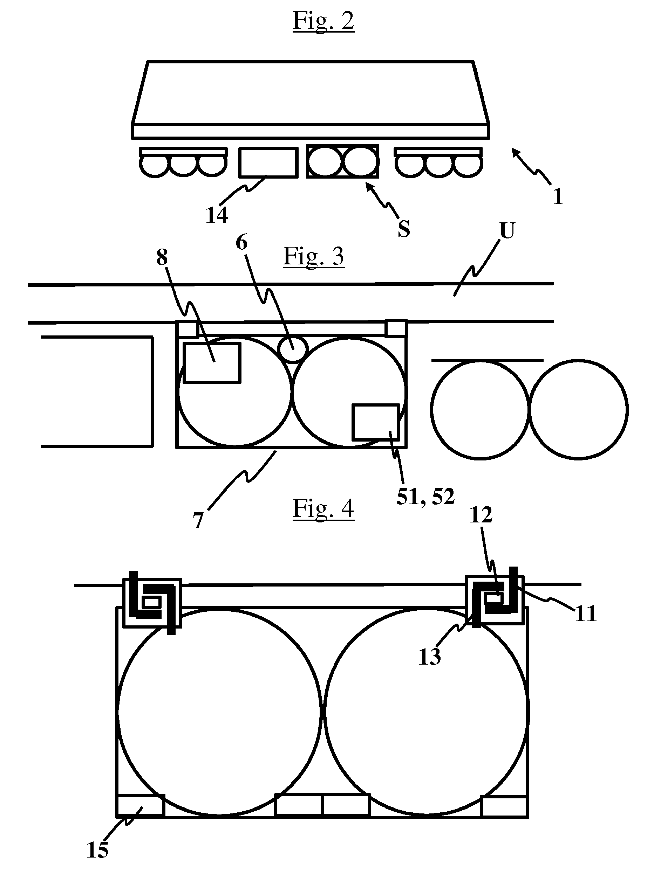

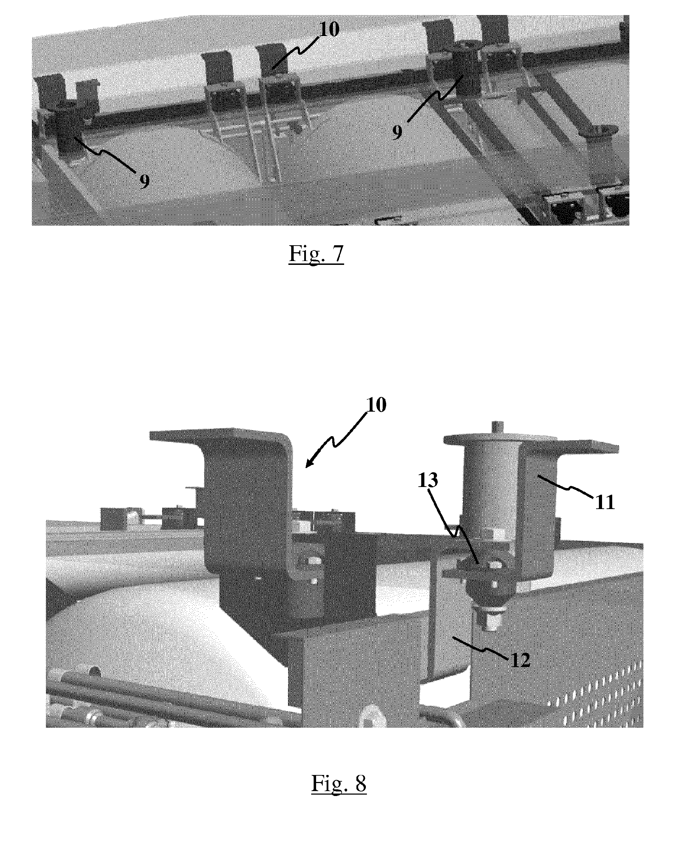

As shown in schematically in FIG. 4, and in more detail in FIG. 8, the assemblies 10 are made of two adjoining L shaped plates 11, 12, each of the plates 11, 12 having a first portion either fixed to the underframe U or to the supporting metallic structure MS/ tanks 2, the second portion of the plates 11, 12 abutting to each other with and interposed plastic element 13.

By means of this assemblies or brackets, the LNG storage assembly is safely attached to the locomotive underframe to prevent tanks or other pieces falling to ground. The attachment brackets are carefully designed to avoid a major railway safety hazard: big pieces going under the railway wheels. Preferably, the brackets are doubled just in case of a bracket general failure. On top of that, each bracket is designed in such a way that, if bolts and assembly parts are loose or broken, the main structure of the bracket avoids that the tanks can fall down to the way. Those structures 10 have a double contrary L shape. If the elastic element gets broken, they contact each other, avoiding shooting down to the way and they generate noise to make evident the necessary maintenance. Also the brackets design is made to show evidently to any inspector if they work is broken status.

The LNG tank safety attachments need also to be flexible to isolate the tanks from the locomotive vibrations. The plastic elements or isolation parts 13 are inside the brackets and they protect the tanks from the locomotive vibration. The locomotive vibration has two main sources: the locomotive movement on the way and the locomotive internal moving parts.

Locomotive internal moving parts are very powerful devices, as the Diesel engine and the traction generator shakes significantly the locomotive. The LNG tanks additional isolation is also necessary to protect them from the locomotive internal vibration. The locomotive suspension system makes a first isolation from the locomotive movement vibration source. But this suspension is not designed to transport passenger or freight. So, to transport the LNG tanks safely, additional isolation is necessary.

The tanks 2 are placed with their axis transversal to the longitudinal direction of the vehicle 1.

As shown in FIG. 7, the railway vehicle according to any of the preceding claims, which comprises bushings 9 placed at the upper part of the underframe U, said bushings 9 being destined to house the connections between fluid, electric and/or the electronic connections between the LNG storage and supply system S and the engines. As described later, these bushings are the first to be placed when mounting the system. There are a number of pipes connecting the lower to the upper part of the frame, allowing the pass of fluids and wiring from and to the engine room. In one embodiment shown in the Figures, those pipes are concentrated in 3 bushings, connecting the upper and lower part of the locomotive.

The following piping goes through the locomotive frame:
- 2 Gas pipes: 1 Gas supply and 1 venting pipes. Both with flow direction going up.
- 2 Engine cooling fluid pipes: 1 hot cooling fluid pipe, with flow direction going down; and 1 cold cooling fluid pipe, with flow direction going up.
- 1 wiring pipe: 1 can bus cable, 1 DC power supply cable, 1 safety cable.

As shown in FIG. 11, the system comprises a regasifier 6 attached to the metallic supporting structure MS. LNG cannot be used directly by the engine: it is a liquid and it is necessary to provide gas to be mixed to the air intake, before engine turbo boost device. The regasifier 6 is the central element providing Natural Gas to the engine in full gas phase and with the right pressure and flow.

The regasifier device 6 is optimized as it is using the engine cooling system as heater fluid. Thus, no extra energy is necessary to gasify the LNG. At the same time the LNG evaporation process provides extra cooling to the engine cooling system. This is an advantage: it improves the internal energy used in cooling fans.

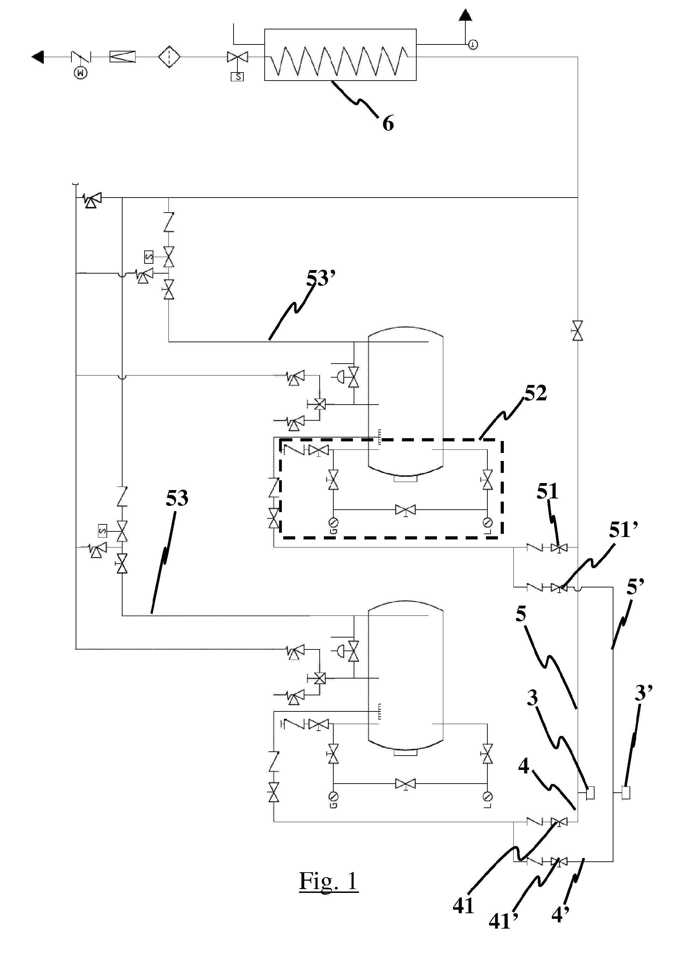

According to another aspect of the invention which could be claimed separately as it constitutes a separate invention, and as shown in FIG. 1 and 5, the LNG storage and supply system S comprises a first gas filling port 3 oriented laterally relative to the longitudinal direction of the vehicle 1, the first gas filling port 3 branching into a plurality of individual filling pipes 4, 5, one for each tank 2, each individual filling pipe 4, 5 comprising an opening / closing valve 41, 51 corresponding to that individual pipe 4, 5, the tank 2 being provided with a filling level sensor sub-assembly 52, so that a compact and accessible tank 2 filling system is achieved. More preferably, the system comprises a second gas filling port 3' oriented laterally relative to the longitudinal direction of the vehicle 1, and placed in the vehicle opposite the side where the first gas filling port 3 is placed, the second gas filling port 3' branching into a plurality of individual filling pipes 4', 5', one for each tank 2, each individual filling pipe 4', 5' comprising an opening / closing valve 41', 51' corresponding to that individual pipe 4', 5'.

The Railway vehicle comprises for each tank 2 a feeding pipe 53, 53' which connects the tank with the regasifier 6, as shown in FIG. 1.

In other words, the LNG is stored in 2 or 3 tanks underframe. Every tank has to be filled by its own. Also in consumption mode, only one tank is servicing gas at a time.

The refilling ports 3, 3' are centralized: one port at each side of the locomotive.

From each refilling port, the operator can service the complete LNG tank arrangement, as shown in FIG. 1. The port has the following components:
- A cryogenic refilling port. Where the operator installs the LNG supply hose.
- 2 or 3 cryogenic shut off valves. One for each tank.
- 4 or 6 LED indicators. To indicate to the operator with 2 colors which thank is full and which is empty.
- 1 cryogenic shut off valve for general venting.

The operator fills the thanks by opening and closing the shut off valves, according to the indicators status.

The railway vehicle comprises a dedicated electronic control unit 8 or control system connected to the filling sensors 52 and the valves. It is necessary to fill the LNG tanks, to keep correct storage conditions, to provide gas to the engine in appropriate conditions and to monitor all LNG storage situations.

The control system provides the following functions:
- LNG refilling control: sequential refilling tank by tank and general process safety insurance.The operator services the complete LNG tank arrangement from a refilling port. He fills the thanks by opening and closing the shut off valves, according to indicators status. The control system monitors the cryogenic refilling operation and gives the necessary warnings.
- LNG storage control: pressures, levels and temperatures supervision. LNG pressures, levels and temperatures change in the locomotive operation. These changes are due to external air temperature, time and gas consumption. The control system monitors the LNG condition, gives the necessary warnings and actuates the system valves to correct certain conditions.
- LNG storage status and alarms communication: through a public communication digital bus.
- LNG regasification control. Control of the use of Diesel engine coolant fluid as heating system for the LNG gasifier: Input / Output coolant fluid temperatures.
- Locomotive identification and LNG storage level status transmission to the refilling station, to automatize the railway operation control.

The control system contains a transponder type transmission system that sends the locomotive LNG information (locomotive number, mileage, LNG level ...) to the LNG supply stations.

The LNG tanks are heavy equipment. To assembly them underframe, there is a very limited height available between the locomotive underframe and the rails. It is not possible to move them with a crane. They have to be assembled and disassembled with a forklift. The tank has a fragile isolation around.

Thus, according to another aspect of the invention that could also be claimed separately as it is inventive per se, the tanks 2 comprise at their ends, two upper welded metallic strips 21, and two lower welded metallic strips 22, the upper welded metallic strips 21 being destined to be supported by and attached to the fixation assemblies 10, the lower welded metallic strips 22 being formed with a rectangular slot 15 destined to the insertion of a raising tool. Thus, the tanks are easy to handle and to mount in the underframe U.

These welded metallic strips 21 are shaped such that they form special hoist points designed to distribute the hoist forces over a wide tank area, to minimize them.

As shown in FIG. 2, the railway vehicle comprises diesel tanks 14 in the underframe U, said diesel tanks 14 being arranged in a volume adjacent to the GNL tanks 2.

The invention has been conceived specifically to be applied to a locomotive.

The invention also relates to a method for mounting a LNG storage and supply system S in the underframe U of a railway vehicle 1, which comprises the steps consisting of:
a) arranging bushings 9 at the upper part of the underframe U, said bushings being placed to connect the lower part of the underframe with the space over the underframe, said bushings 9 being destined to conduct the connections between fluid, electric and/or the electronic connections between the LNG storage and supply system S and the engines;
b) fixing a metallic supporting structure MS to the underframe U, the supporting structure being provided with piping being destined to be connected to the LNG tanks 2, a regasifier 6 and the filling port pipes 5, 5';
c) Introducing the LNG tanks 2 in the supporting structure MS and fixing them to the underframe U;
d) fixing gas filling ports 3, 3' oriented laterally relative to the longitudinal direction of the vehicle 1 on both sides of the vehicle, and opening / closing valves 41, 51, 41', 51';
e) mounting covers 71, 73, 74, 75, 76 on the metallic supporting structure MS for obtaining a protection box 7.

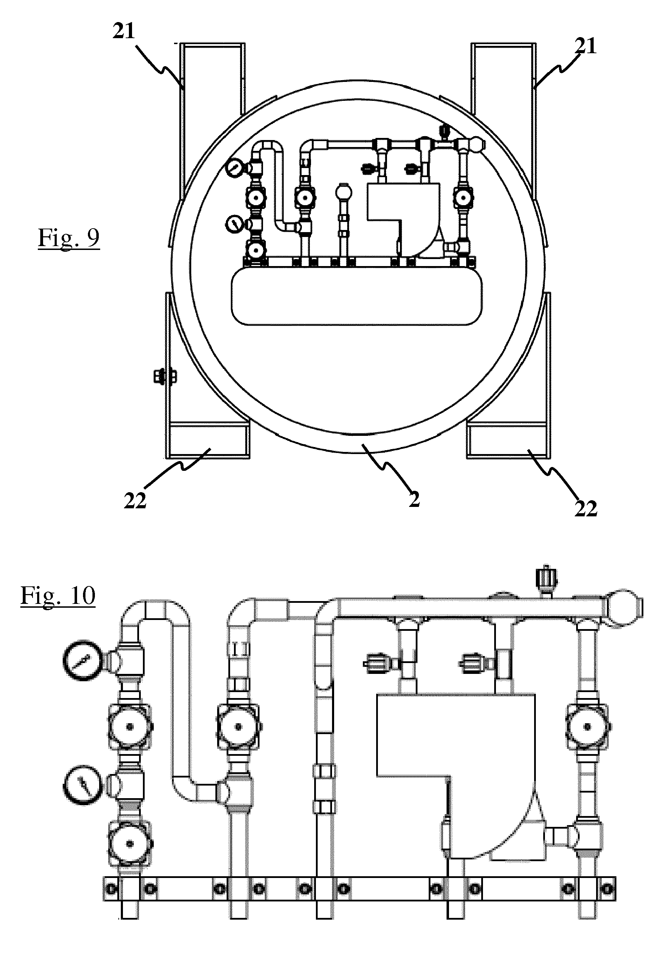

This sequence simplifies the assembly of the tanks in locomotives, and allows mounting in workshop or factory most of the components and connections, leaving for in situ work the minimum number of steps, further taking into account the limited space that is available and the inaccessibility of this space. In particular, step a) and step b) become very simple, since no covers or deposits are present at this stages in the space under the underframe, and therefore the installer can work comfortably. After performing these steps, the tanks can be placed and attached in a reliable and easy manner. To this end, the tanks, as shown in FIGS 9 and 10 already carry their individual connections and are adapted with the shaped and welded metal strips to be handled by a raising fork and therefore can be easily hung on the fixation assemblies 10'.

The LNG storage and supply system includes a number of special cryogenic instruments and valves (11). The instruments and valves are organized in 2 groups:
- The instruments and valves group associated to each LNG tank (shown in FIG. 10) are:
   - Tank LNG Level and Tank LNG pressure measurements: 2 shoot off valves + 1 differential pressure valve + 1 level indicator + 1 pressure indicator.
   - Tank LNG safety and venting devices: 2 safety valves + 1 directional 3 way valve + 1 shoot off valve + 1 anti-return valve.
- The instruments and valves assembled on the rest of the LNG fuel assembly:
   - Tank LNG Economizer: 2/3 differential pressure valve.
   - LNG consumption circuit: 2/3 solenoid valves + 2/3 shut off valves + 2/3 anti-return valves.
   - LNG refiling circuit: 2/3 shut off valves + 2/3 anti-return valves.
   - LNG system safety and venting devices: 3 safety valves + 1 directional valve + 1 shoot off valve.
   - LNG regasifier circuit: 1 shut off valve + 1 gas pressure regulator + 1 flow regulation valve.

In this text, the term "comprises" and its derivations should not be understood in an excluding sense, that is, these terms should not be interpreted as excluding the possibility that what is described and defined may include further elements or steps.

The invention is obviously not limited to the specific embodiment described herein, but also encompasses any variations that may be considered by any person skilled in the art, within the general scope of the invention as defined in the claims.

## Claims

1. Railway vehicle (1) comprising in its underframe (U) a LNG storage and supply system (S), the system (S) comprising a box (7) and a plurality of LNG tanks (2) arranged in the box (7), **characterized in that** the box (7) is attached to the underframe by means of fixation assemblies (10') and the LNG tanks (2) are attached to the underframe (U) by means of fixation assemblies (10) different from the fixation assembles (10') of the box, such that the box (7) and the LNG tanks (2) are independently fixed to the underframe (U).

2. Railway vehicle according to claim 1, wherein the box (7) is made of a metallic supporting structure (MS), the metallic supporting structure (MS) comprising a piping attached thereto, said piping being destined to be connected to the LNG tanks (2), the box (7) comprising covers (71, 73, 74, 75, 76) supported by the metallic supporting structure (MS).

3. Railway vehicle according to claim 2 wherein the box (7) comprises:
- two side covers (71) supported by and bolted to the metallic supporting structure (MS);
- an inspection trap (72) for each tank (2), said inspection traps being mounted such that they tend to the closed position by their own weight;
- an undercover (73) provided with ventilation holes;
- a front cover (74) provided with ventilation holes;
- two filling port covers (75);
- a filling ports piping cover (76);

4. Railway vehicle according to any of the previous claims, wherein the assemblies (10) are made of two adjoining L shaped plates (11, 12), each of the plates (11, 12) having a first portion either fixed to the underframe (U) or to the supporting metallic structure (MS)/ tanks (2), the second portion of the plates (11, 12) abutting to each other with and interposed plastic element (13).

5. Railway vehicle according to any of the preceding claims, wherein the tanks (2) are placed with their axis transversal to the longitudinal direction of the vehicle (1).

6. Railway vehicle according to any of the preceding claims, which comprises bushings (9) placed at the upper part of the underframe (U), said bushings (9) being destined to house the connections between fluid, electric and/or the electronic connections between the LNG storage and supply system (S) and the engines.

7. Railway vehicle according to claim 2 or any claim depending thereof, which comprises a regasifier (6) attached to the metallic supporting structure (MS).

8. Railway vehicle (1) according to any of the preceding claims, wherein the LNG storage and supply system (S) comprises a first gas filling port (3) oriented laterally relative to the longitudinal direction of the vehicle (1), the first gas filling port (3) branching into a plurality of individual filling pipes (4, 5), one for each tank (2), each individual filling pipe (4, 5) comprising an opening / closing valve (41, 51) corresponding to that individual pipe (4, 5), the tank (2) being provided with a filling level sensor sub-assembly (52), so that a compact and accessible tank (2) filling system is achieved.

9. Railway vehicle according to claim 8, which comprises a second gas filling port (3') oriented laterally relative to the longitudinal direction of the vehicle (1), and placed in the vehicle opposite the side where the first gas filling port (3) is placed, the second gas filling port (3') branching into a plurality of individual filling pipes (4', 5'), one for each tank (2), each individual filling pipe (4', 5') comprising an opening / closing valve (41', 51') corresponding to that individual pipe (4', 5').

10. Railway vehicle according to claim 7 or any claim depending thereof, which comprises for each tank (2) a feeding pipe (53, 53') which connects the tank with the regasifier (6).

11. Railway vehicle according to any of the preceding claims, comprising an electronic control unit (8) connected to the filling sensors (52) and the valves.

12. Railway vehicle according to any of the preceding claims, wherein the tanks (2) comprise at their ends, two upper welded metallic strips (21), and two lower welded metallic strips (22), the upper welded metallic strips (21) (21) being destined to be supported by and attached to the fixation assemblies (10), the lower welded metallic strips (22) being formed with a rectangular slot (15) destined to the insertion of a raising tool.

13. Railway vehicle according to any of the preceding claims, which comprises diesel tanks (14) in the underframe (U), said diesel tanks (14) being arranged in a volume adjacent to the GNL tanks (2).

14. Railway according to any of the preceding claims, wherein the vehicle is a locomotive.

15. Method for mounting a LNG storage and supply system (S) in the underframe (U) of a railway vehicle (1), which comprises the steps consisting of:
a) arranging bushings (9) at the upper part of the underframe (U), said bushings being placed to connect the lower part of the underframe with the space over the underframe, said bushings (9) being destined to conduct the connections between fluid, electric and/or the electronic connections between the LNG storage and supply system (S) and the engines;
b) fixing a metallic supporting structure (MS) to the underframe (U), the supporting structure being provided with piping being destined to be connected to the LNG tanks (2), a regasifier (6) and the filling port pipes (5, 5');
c) Introducing the LNG tanks (2) in the supporting structure (MS) and fixing them to the underframe (U);
d) fixing gas filling ports (3, 3') oriented laterally relative to the longitudinal direction of the vehicle (1) on both sides of the vehicle, and opening / closing valves (41, 51, 41', 51');
e) mounting covers (71, 73, 74, 75, 76) on the metallic supporting structure (MS) for obtaining a protection box (7).
